# EUROPÄISCHE PATENTSCHRIFT

(11) **EP 0 931 739 B1**
(45) Veröffentlichungstag und Bekanntmachung des Hinweises auf die Patenterteilung: **11.09.2002**
(21) Anmeldenummer: 99100902.8
(22) Anmeldetag: 19.01.1999
(51) Int. Cl.: B65G 47/90, B65G 57/03

(54) **Lagenübersetzer für Palettierer oder dergleichen**
Layer loader for a palletizer or the same
Transporteur de couches pour un palettiseur ou simulaire

(30) Priorität: 24.01.1998 DE 29801158 U
(43) Veröffentlichungstag der Anmeldung: 28.07.1999
(73) Patentinhaber: MSK-VERPACKUNGS-SYSTEME GESELLSCHAFT MIT BESCHRÄNKTER HAFTUNG, D-47533 Kleve (DE)
(72) Erfinder: Hannen, Reiner, 47574 Goch (DE); Michels, Frank, 47533 Kleve (DE); Vermeulen, Norbert, 47533 Kleve-Warbeyen (DE)
(74) Vertreter: Stark, Walter, Dr.-Ing.

(56) Entgegenhaltungen:
- WO-A-95/30615
- DE-U- 29 710 546

## Beschreibung

Die Erfindung betrifft einen Lagenübersetzer gemäß dem Oberbegriff der Ansprüche 1 oder 2.

Aus der Praxis sind derartige Lagenübersetzer bekannt, die z. B. bei der Flaschenherstellung eingesetzt werden. Hierbei werden die Flaschen auf einem ersten Förderband antransportiert und auf einer der Palettengröße entsprechenden Standfläche aufgestaut. Sobald diese mit Flaschen vollständig gefüllt ist, werden die Flaschen durch den Lagenübersetzer gegriffen und auf eine Palette bzw. einen Palettenstapel gesetzt. Eine wesentliche Eigenschaft, die bei der Konstruktion solcher Lagenübersetzer berücksichtigt werden muß, ist die Zielgenauigkeit, mit der die Übersetzerplatte sowohl beim Aufnehmen als auch beim Absetzen der zu transportierenden Güter in die jeweilige Position verfahren werden kann. Dies ist insofern von Bedeutung, da ein Aufnehmen bzw. Absetzen erst bei genau positionierter und stillstehender, d. h. nicht schwingender, pendelnder und auch nicht verdrehter Übersetzerplatte möglich ist. Sofern die Übersetzerplatte noch nachpositioniert werden muß bzw. die Pendelbewegung oder die Drehbewegung erst abklingen muß, führt dies zu zeitlichen Verzögerungen im Produktions- bzw. Arbeitsablauf, was die jeweiligen Kosten erhöht.

Als Hubsystem werden bei solchen Lagenübersetzern hauptsächlich zwei verschiedene Systeme verwendet. Zum einen ist ein Seil bzw. Schmalband mittig an der Übersetzerplatte befestigt, und zumindest eine Scheren- oder Parallelogrammechanik mit ineinander kämmenden Zahnradsegmenten verhindert ein Kippen und/oder Pendeln der Übersetzerplatte, wodurch die Zielgenauigkeit sowohl beim Aufnehmen als auch beim Absetzen der Güter verringert würde. Nachteilig hierbei ist, daß insbesondere die Zahnradsegmente stark verschleißen und die Scheren- oder Parallelogrammechanik durch auftretendes Spiel wackelig und ungenau wird und insofern der nahezu fortlaufenden Belastung rund um die Uhr fast das ganze Jahr über nicht gewachsen ist. Reparaturund Wartungstätigkeiten am Lagenübersetzer würden folglich den gesamten Arbeits- bzw. Produktionsablauf stören und aufhalten oder sogar stillegen. Dies ist umso kritischer, als der Lagenübersetzer normalerweise rund um die Uhr eingesetzt wird und nur einmal im Jahr zu Wartungszwecken für wenige Tage angehalten wird.

Zum anderen wird auch ein Hubsystem eingesetzt, bei dem die Übersetzerplatte durch vier jeweils an den Seitenrändern angeordnete Breitbänder vertikal verfahren wird. Hierbei ist jedoch die Zugänglichkeit der Übersetzerplatte, und damit auch die Erreichbarkeit der Greifmechaniken, Saugnapfsteuerungen etc. stark eingeschränkt bis vollständig verhindert. Somit muß erst eine Entfernung oder Demontage erfolgen, bevor eventuelle Reparaturen oder Wartungstätigkeiten an der Übersetzerplatte ausgeführt werden können, was sehr zeitaufwendig ist. Außerdem wird der Gleichlauf der Breitbandwickeldorne über Winkelgetriebe erreicht, die ebenfalls anfällig und mit Verschleiß behaftet und zudem auch noch kostenintensiv und teuer sind.

Aufgabe der Erfindung ist es, die vorgenannten Nachteile zu vermeiden und einen Lagenübersetzer anzugeben, der Pendelbewegungen verhindert, einen geringen Verschleiß aufweist und bei dem eine gute Zugänglichkeit der Übersetzerplatte mit den daran angeordneten Steuerungen der Greifer, Saugnäpfe etc. gegeben ist.

Diese Aufgabe wird gelöst durch einen Lagenübersetzer, bei dem das Hubsystem eine orthogonal zur horizontalen Hauptverfahrrichtung starre Stabilisierungseinrichtung aufweist, wobei die Stabilisierungseinrichtung aus zumindest einem an der Übersetzerplatte 4 orthogonal zur horizontalen Hauptverfahrrichtung starr befestigten und durch eine entsprechend ausgebildete Führung im Hubsystem 3 durchgeführten stabförmigen Stabilisierungselement besteht. Auch kann die Stabilisierungseinrichtung aus zumindest einer parallel zur horizontalen Hauptverfahrrichtung ausgerichteten, jeweils mit einem Ende orthogonal zur horizontalen Hauptverfahrrichtung starr an der Übersetzerplatte 4 bzw. an dem Hubsystem 3 angebrachten Stabilisierungsschere 8 bestehen. Bei diesen erfindungsgemäßen Lagenübersetzern wird eine Auslenkung bzw. ein Pendeln parallel zur horizontalen Hauptverfahrrichtung durch das Breitband bzw. die Breitbänder verhindert oder zumindest gedämpft und deutlich verringert, und eine Auslenkung bzw. ein Pendeln orthogonal zur horizontalen Hauptverfahrrichtung wird durch die Stabilisierungseinrichtung vermieden bzw. reduziert. Da Auslenkungen in anderen Richtungen jeweils durch Superposition der beiden vorgenannten Richtungen gebildet werden können, werden auch anders ausgerichtete Auslenkungen vermieden bzw. gedämpft. Durch die Anordnung der Breitbänder parallel zur horizontalen Hauptverfahrrichtung wird eine gute Zugänglichkeit der Übersetzerplatte und der an ihr angeordneten Greifmechaniken, Saugnapfsteuerungen etc. gewährleistet.

Sofern die Stabilisierungseinrichtung aus zumindest einem an der Übersetzerplatte orthogonal zur horizontalen Hauptverfahrrichtung starr befestigten und durch eine entsprechend ausgebildete Führung im Hubsystem durchgeführten stabförmigen Stabilisierungselement besteht, kann somit mit einer einfachen und unempfindlichen sowie wartungs- und verschleißarmen Konstruktion Auslenkungen orthogonal zur horizontalen Hauptverfahrrichtung vermieden oder zumindest gedämpft und verringert werden.

Sofern die Stabilisierungseinrichtung aus zumindest einer parallel zur horizontalen Hauptverfahrrichtung ausgerichteten, jeweils mit einem Ende orthogonal zur horizontalen Hauptverfahrrichtung starr an der Übersetzerplatte bzw. an dem Hubsystem angebrachten Stabilisierungsschere besteht, wird somit beim Anheben der Übersetzerplatte kein Bauteil oben aus dem Hubsystem herausgefahren, wodurch die erforderliche Raumhöhe verringert wird und ein solcher Lagenübersetzer auch bei geringeren Raumhöhen eingesetzt werden kann.

Vorzugsweise können wenigstens zwei Breitbänder vorgesehen sein, die jeweils randseitig an der Übersetzerplatte befestigt sind, so daß zum einen eine stärkere Dämpfung bzw. eine größere Verringerung von Pendelbewegungen erzielt wird und zum anderen kann die Übersetzerplatte durch Gleichlauf der Breitbänder sicher in der horizontalen Lage gehalten werden.

Vorteilhafterweise kann die Breite der Breitbänder ungefähr der Länge der Randseiten der Übersetzerplatte entsprechen, so daß eine maximale Dämpfung bzw. Verringerung von Auslenkungen durch die größtmögliche Diagonal-Sperrkraft erzielt wird.

Bei einem bevorzugten Ausführungsbeispiel kann bei mehreren Breitbändern zur Gewährleistung des Gleichlaufes der Breitbänder wenigstens ein synchronisierendes Verbindungselement, wie z. B. eine Kette, ein Riemen oder Zahnriemen oder dergleichen vorgesehen sein, so daß die Übersetzerplatte sicher in der horizontalen Lage gehalten wird und das synchronisierende Verbindungselement wartungs- und verschleißarm ist.

Vorteilhafterweise kann das Breitband mittig an der Übersetzerplatte befestigt und das stabförmige Stabilisierungselement auch parallel zur horizontalen Hauptverfahrrichtung starr an der Übersetzerplatte angebracht sein, so daß hierdurch die Übersetzerplatte sicher in der horizontalen Lage gehalten wird.

Das Breitband kann mittig an der Übersetzerplatte befestigt und die Stabilisierungsschere an der Übersetzerplatte und dem Hubsystem jeweils parallel zur Befestigungsachse kippsicher angebracht sein, so daß hierdurch die Übersetzerplatte sicher in der horizontalen Lage gehalten wird.

Im folgenden wird ein in der Zeichnung dargestelltes Ausführungsbeispiel der Erfindung erläutert. Es zeigen:
- Fig. 1: eine Seitenansicht eines erfindungsgemäßen Lagenübersetzers,
- Fig. 2: eine Frontansicht des Gegenstandes nach Fig. 1 und
- Fig. 3: eine Draufsicht auf den Gegenstand nach den Figuren 1 und 2.

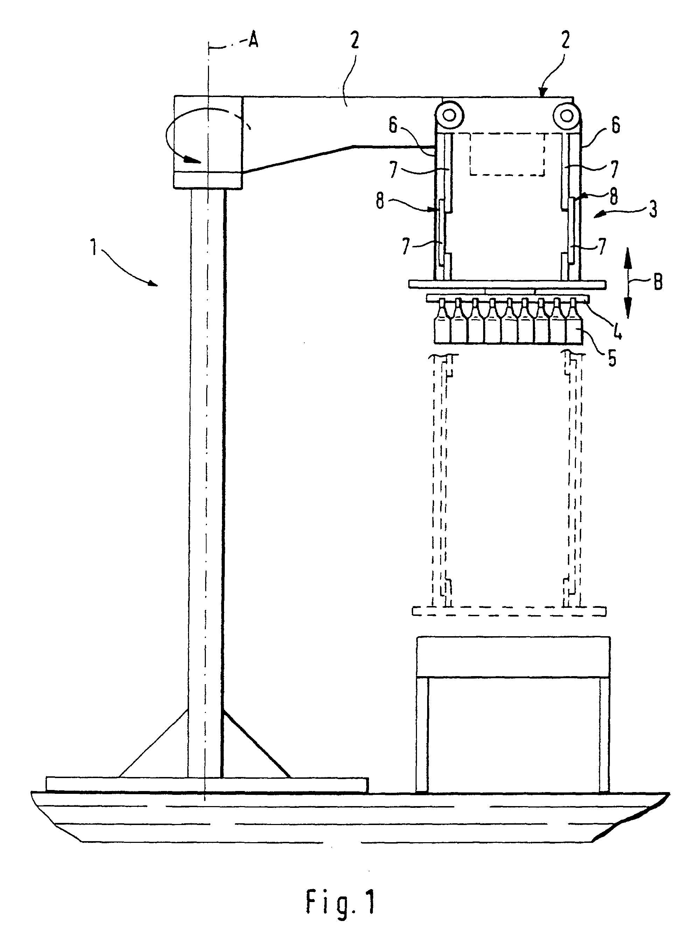

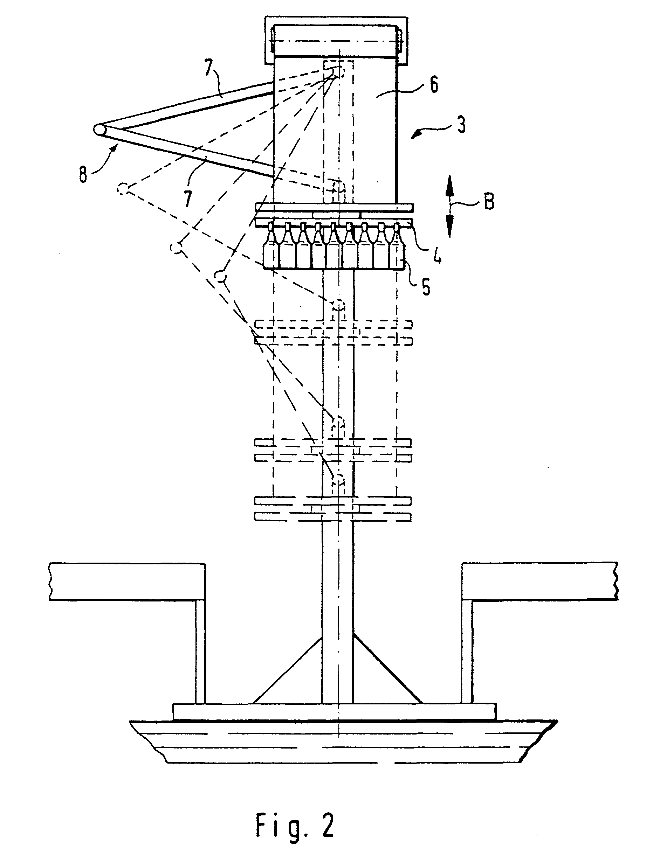

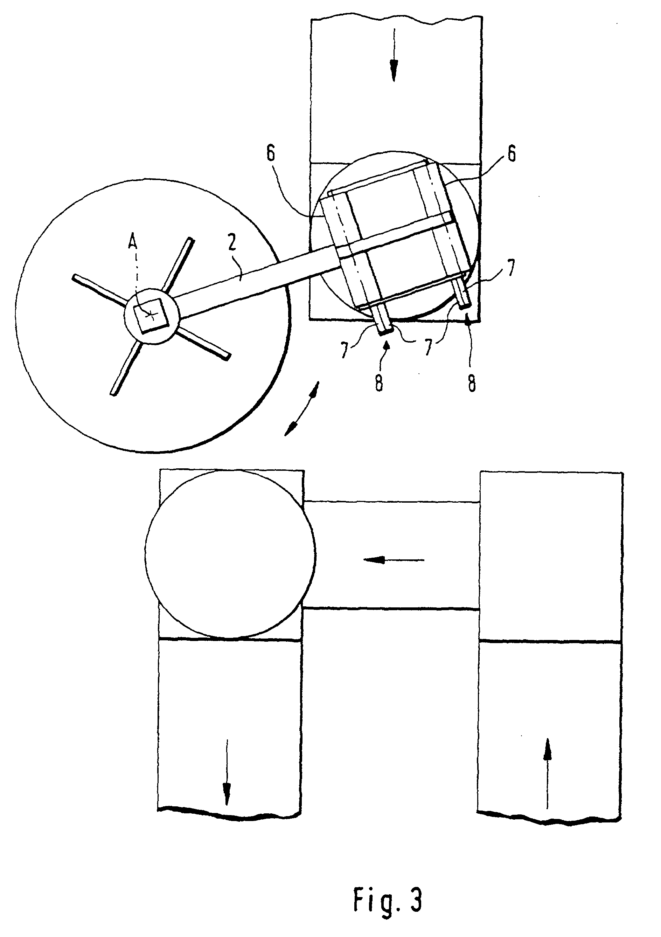

Die Figuren 1 bis 3 zeigen einen Lagenübersetzer 1, der ein um die Achse A verschwenkbares Positionierungssystem 2 aufweist, an dem eine in Richtung B durch ein Hubsystem 3 verfahrbare Übersetzerplatte 4 angeordnet ist. Die Übersetzerplatte 4 weist unterseitig angeordnete, jedoch in der Zeichnung nicht im Detail dargestellte Saugnäpfe bzw. Schläuche oder dergleichen zum Halten von Flaschen 5 auf.

Das Hubsystem besteht aus zwei motorisch angetriebenen Breitbändern 6, die randseitig an der Übersetzerplatte 4 befestigt sind, wobei die Breite der Breitbänder 6 ungefähr der Länge der Randseiten der Übersetzerplatte 4 entspricht. Der Gleichlauf der Breitbänder 6 wird durch einen in der Zeichnung nicht dargestellten Riemen gewährleistet. Weiterhin weist das Hubsystem 3 aus zwei gelenkig miteinander verbundenen Scherenteilen 7 bestehende, jeweils randseitig gelenkig an der Übersetzerplatte 4 befestigte Stabilisierungsscheren 8 auf, die parallel zu den Breitbändern 6 ausgerichtet sind.

## Patentansprüche

1. Lagenübersetzer (1) für Palettierer oder dergleichen, insbesondere für Glaspalettierer, mit einem translatorisch und/oder rotatorisch horizontal verfahrbaren Positionierungssystem, an dem eine von einem Hubsystem (3) vertikal verfahrbare Übersetzerplatte (4) mit unterseitigen Greifern, Saugnäpfen oder dergleichen angeordnet ist, wobei das Hubsystem (3) aus zumindest einem motorisch angetriebenen, parallel zur horizontalen Hauptverfahrrichtung ausgerichteten Breitband (6) besteht, das Hubsystem (3) eine orthogonal zur horizontalen Hauptverfahrrichtung starre Stabilisierungseinrichtung aufweist,**dadurch gekennzeichnet, daß** die Stabilisierungseinrichtung aus zumindest einem an der Übersetzerplatte (4) orthogonal zur horizontalen Hauptverfahrrichtung starr befestigten und durch eine entsprechend ausgebildete Führung im Hubsystem (3) durchgeführten stabförmigen Stabilisierungselement besteht.

2. Lagenübersetzer (1) für Palettierer oder dergleichen, insbesondere für Glaspalettierer, mit einem translatorisch und/oder rotatorisch horizontal verfahrbaren Positionierungssystem, an dem eine von einem Hubsystem (3) vertikal verfahrbare Übersetzerplatte (4) mit unterseitigen Greifern, Saugnäpfen oder dergleichen angeordnet ist, wobei das Hubsystem (3) aus zumindest einem motorisch angetriebenen, parallel zur horizontalen Hauptverfahrrichtung ausgerichteten Breitband (6) besteht, das Hubsystem (3) eine orthogonal zur horizontalen Hauptverfahrrichtung starre Stabilisierungseinrichtung aufweist, **dadurch gekennzeichnet, daß** die Stabilisierungseinrichtung aus zumindest einer parallel zur horizontalen Hauptverfahrrichtung ausgerichteten, jeweils mit einem Ende orthogonal zur horizontalen Hauptverfahrrichtung starr an der Übersetzerplatte (4) bzw. an dem Hubsystem (3) angebrachten Stabilisierungsschere (8) besteht.

3. Lagenübersetzer (1) nach Anspruch 1 oder 2, **dadurch gekennzeichnet, daß** wenigstens zwei Breitbänder (6) vorgesehen sind, die jeweils randseitig an der Übersetzerplatte (4) befestigt sind.

4. Lagenübersetzer (1) nach Anspruch 3, **dadurch gekennzeichnet, daß** die Breite der Breitbänder (6) ungefähr der Länge der Randseiten der Übersetzerplatte (4) entspricht.

5. Lagenübersetzer (1) nach einem der Ansprüche 1 bis 4, **dadurch gekennzeichnet, daß** bei mehreren Breitbändern (6) zur Gewährleistung des Gleichlaufes der Breitbänder (6) wenigstens ein synchronisierendes Verbindungselement, wie z. B. eine Kette, ein Riemen oder Zahnriemen oder dergleichen vorgesehen ist.

6. Lagenübersetzer (1) nach Anspruch 1 oder nach einem der Ansprüche 3 bis 5 in Kombination mit Anspruch 1, **dadurch gekennzeichnet, daß** das Breitband (6) mittig an der Übersetzerplatte (4) befestigt und das stabförmige Stabilisierungselement auch parallel zur horizontalen Hauptverfahrrichtung starr an der Übersetzerplatte (4) angebracht ist.

7. Lagenübersetzer (1) nach Anspruch 2 oder einem der Ansprüche 3 bis 5 in Kombination mit Anspruch 2, **dadurch gekennzeichnet, daß** das Breitband (6) mittig an der Übersetzerplatte (4) befestigt und die Stabilisierungsschere (8) an der Übersetzerplatte (4) und dem Hubsystem (3) jeweils parallel zur Befestigungsachse kippsicher angebracht sind.

## Claims

1. Position changer (1) for palletising machines or the like, more especially for glass palletising machines, said changer having a positioning system, which is horizontally displaceable in a translatory and/or rotary manner, and on which system there is disposed a transfer plate (4), which is vertically displaceable by a lifting system (3) and has grippers, suction cups or the like on the underside, the lifting system (3) comprising at least one motor-driven wide belt (6), which is aligned parallel to the main horizontal direction of displacement, and the lifting system (3) having a stabilising means which is rigid orthogonally relative to the main horizontal direction of displacement, **characterised in that** the stabilising means comprises at least one bar-like stabilising member which is rigidly mounted on the transfer plate (4) orthogonally relative to the main horizontal direction of displacement and is traversed by an appropriately configured guide means in the lifting system (3).

2. Position changer (1) for palletising machines or the like, more especially for glass palletising machines, said changer having a positioning system, which is horizontally displaceable in a translatory and/or rotary manner, and on which system there is disposed a transfer plate (4), which is vertically displaceable by a lifting system (3) and has grippers, suction cups or the like on the underside, the lifting system (3) comprising at least one motor-driven wide belt (6), which is aligned parallel to the main horizontal direction of displacement, and the lifting system (3) having a stabilising means which is rigid orthogonally relative to the main horizontal direction of displacement, **characterised in that** the stabilising means comprises at least one stabilising scissor linkage (8) which is orientated parallel to the main horizontal direction of displacement and is rigidly attached by one end to the transfer plate (4) or respectively to the lifting system (3) orthogonally relative to the main horizontal direction of displacement.

3. Position changer (1) according to claim 1 or 2, **characterised in that** at least two wide belts (6) are provided, which are mounted on each edge of the transfer plate (4).

4. Position changer (1) according to claim 3, **characterised in that** the width of the wide belts (6) corresponds approximately to the length of the edges of the transfer plate (4).

5. Position changer (1) according to one of claims 1 to 4, **characterised in that**, if there are a plurality of wide belts (6), at least one synchronising connecting member, such as, for example, a chain, a belt or toothed belt or the like, is provided to ensure the synchronism of the wide belts (6).

6. Position changer (1) according to claim 1 or according to one of claims 3 to 5 in combination with claim 1, **characterised in that** the wide belt (6) is mounted centrally on the transfer plate (4), and the bar-like stabilising member is also attached rigidly to the transfer plate (4) parallel to the main horizontal direction of displacement.

7. Position changer (1) according to claim 2 or one of claims 3 to 5 in combination with claim 2, **characterised in that** the wide belt (6) is mounted centrally on the transfer plate (4), and the stabilising scissor linkage is attached in a stable manner to the transfer plate (4) and the lifting system (3) respectively parallel to the mounting axis.

## Revendications

1. Transporteur de couches (1) pour palettiseurs ou installations similaires, notamment pour palettiseurs de l'industrie verrière, comportant un système de positionnement à mobilité horizontale translatoire et/ou rotatoire, sur lequel se trouve une plaque de transfert (4) pouvant être animée de mouvements verticaux par un système de levage (3), et dont la face inférieure présente des organes de préhension, des ventouses ou pièces analogues, le système de levage (3) étant constitué d'au moins une bande large (6) à entraînement motorisé, orientée parallèlement à la direction principale horizontale de transport, ledit système de levage (3) étant muni d'un dispositif de stabilisation à rigidité orthogonale par rapport à la direction principale horizontale de transport, **caractérisé par le fait que** ledit dispositif de stabilisation est constitué d'au moins un élément stabilisateur en forme de barreau fixé rigidement à la plaque de transfert (4), orthogonalement par rapport à la direction principale horizontale de transport, et guidé d'un trait dans ledit système de levage (3), par l'intermédiaire d'un guide de réalisation correspondante.

2. Transporteur de couches (1) pour palettiseurs ou installations similaires, notamment pour palettiseurs de l'industrie verrière, comportant un système de positionnement à mobilité horizontale translatoire et/ou rotatoire, sur lequel se trouve une plaque de transfert (4) pouvant être animée de mouvements verticaux par un système de levage (3), et dont la face inférieure présente des organes de préhension, des ventouses ou pièces analogues, le système de levage (3) étant constitué d'au moins une bande large (6) à entraînement motorisé, orientée parallèlement à la direction principale horizontale de transport, ledit système de levage (3) étant muni d'un dispositif de stabilisation à rigidité orthogonale par rapport à la direction principale horizontale de transport, **caractérisé par le fait que** ledit dispositif de stabilisation est constitué d'au moins un croisillon stabilisateur (8) orienté parallèlement à la direction principale horizontale de transport et respectivement relié de façon rigide par une extrémité, à la plaque de transfert (4) ou au système de levage (3), orthogonalement par rapport à ladite direction principale horizontale de transport.

3. Transporteur de couches (1) selon la revendication 1 ou 2, **caractérisé par** la présence d'au moins deux bandes larges (6) respectivement fixées, par leurs bords, à la plaque de transfert (4).

4. Transporteur de couches (1) selon la revendication 3, **caractérisé par le fait que** la largeur des bandes larges (6) correspond approximativement à la longueur des faces marginales de la plaque de transfert (4).

5. Transporteur de couches (1) selon l'une des revendications 1 à 4, **caractérisé par le fait que**, en présence de plusieurs bandes larges (6), au moins un élément de liaison à effet de synchronisation, comme par exemple une chaîne, une courroie, une courroie crantée ou élément similaire, est prévu pour garantir le défilement synchrone desdites bandes larges (6).

6. Transporteur de couches (1) selon la revendication 1, ou selon l'une des revendications 3 à 5 en combinaison avec la revendication 1, **caractérisé par le fait que** la bande large (6) est fixée centralement à la plaque de transfert (4), et l'élément stabilisateur en forme de barreau est également installé de façon rigide sur ladite plaque de transfert (4), parallèlement à la direction principale horizontale de transport.

7. Transporteur de couches (1) selon la revendication 2, ou selon l'une des revendications 3 à 5 en combinaison avec la revendication 2, **caractérisé par le fait que** la bande large (6) est fixée centralement à la plaque de transfert (4), et le croisillon stabilisateur (8) est implanté sur ladite plaque de transfert (4) et sur le système de levage (3) avec arrêt antibasculement, de façon respectivement parallèle à l'axe de fixation.
